Europäisches Patentamt

European Patent Office

Office européen des brevets

(11) Veröffentlichungsnummer: **0 418 631 A2**

(12)
# EUROPÄISCHE PATENTANMELDUNG

(21) Anmeldenummer: 90116924.3

(22) Anmeldetag: 04.09.90

(51) Int. Cl.⁵: **C08G 18/42**, C08G 18/10, C08G 18/08, C08G 63/91

(30) Priorität: 16.09.89 DE 3930995

(43) Veröffentlichungstag der Anmeldung: 27.03.91 Patentblatt 91/13

(84) Benannte Vertragsstaaten: DE FR GB IT

(71) Anmelder: **BAYER AG**

**W-5090 Leverkusen 1 Bayerwerk(DE)**

(72) Erfinder: **Krüger, Karl-Wilfried, Dr.**
**Pfauenstrasse 24**
**W-4047 Dormagen(DE)**
Erfinder: **Frauendorf, Beatrix, Dr.**
**Charlottenburger Strasse 34**
**W-5090 Leverkusen 1(DE)**
Erfinder: **Feltgen, Karlheinz, Dr.**
**Iltisweg 62**
**W-4047 Dormagen 11(DE)**
Erfinder: **Waldmann, Helmut, Dr.**
**Henry-Theodor-von Böttinger-Strasse 15**
**W-5090 Leverkusen 1(DE)**

(54) **Verfahren zur Herstellung von Polyester(urethan)polyolen enger Molekulargewichtsverteilung und ihre Verwendung.**

(57) Die Erfindung betrifft ein Verfahren zur Herstellung von gegebenenfalls geringe Mengen an Urethangruppen enthaltenden Polyesterpolyolen, (vorzugsweise -diole), mit engerer Molekulargewichtsverteilung, als sie bei der thermischen Polykondensation anfallen, dadurch gekennzeichnet, daß man durch Umsetzung der Polyester mit unterschüssigen Mengen an Diisocyanaten, z.B. 5 bis 15 %, in einem Gemisch aus polaren und unpolaren Lösungsmitteln eine Phasentrennung/Stofftrennung herbeiführt und in dem höherpolaren Lösungsmittel Polyesterdiole größerer Einheitlichkeit und mit deutlich verringerten Gehalten an niedermolekularen Diolen erhält. Erfindungsgegenstand sind auch entsprechende Polyesterdiole engerer Molekulargewichtsverteilung, sowie deren Verwendung zur Herstellung von Polyurethan-Elastomeren, bevorzugt von Polyurethan-Elastomerfäden, mit verbesserten elastischen Eigenschaften.

EP 0 418 631 A2

EP 0 418 631 A2

## VERFAHREN ZUR HERSTELLUNG VON POLYESTER(URETHAN)POLYOLEN ENGER MOLEKULARGE-WICHTSVERTEILUNG UND IHRE VERWENDUNG

Die Erfindung betrifft ein Verfahren zur Herstellung von gegebenenfalls geringe Mengen an Urethangruppen enthaltenden Polyesterpolyolen, (vorzugsweise -diole), mit engerer Molekulargewichtsverteilung, als bei der thermischen Polykondensation anfallen, dadurch gekennzeichnet, daß man durch Umsetzung der Polyester mit unterschüssigen Mengen an Diisocyanaten, z.B. 5 bis 15 %, in einem Gemisch aus polaren und unpolaren Lösungsmitteln eine Phasentrennung/Stofftrennung herbeiführt und in dem höherpolaren Lösungsmittel Polyesterdiole größerer Einheitlichkeit und mit deutlich verringerten Gehalten an niedermolekularen Diolen erhält. Erfindungsgegenstand sind auch entsprechende Polyesterdiole engerer Molekulargewichtsverteilung, sowie deren Verwendung zur Herstellung von Polyurethan-Elastomeren, bevorzugt von Polyurethan-Elastomerfäden, mit verbesserten elastischen Eigenschaften

Polyester(urethan)diole dienen zum Aufbau von segmentierten Polyurethan-Elastomeren, vorzugsweise für Fäden, Elasthane. Dazu setzt man Polyesterdiole mit überschüssigen Mengen an mehrwertigen Diisocyanaten, z.B. Diphenylmethan-4,4'-diisocyanat, in Molverhältnissen von etwa 1:1,8 bis 1:2,5 um. Die gebildeten NCO-Prepolymere werden weiter mit z.B. aliphatischen Diaminen, zu segmentierten, aus Hart- und Weichsegmenten aufgebauten Polyurethan-Harnstoffen kettenverlängert (siehe v. Falkai, "Synthesefasern", Verlag Chemie (1981), S. 180-190).

Die zur Herstellung der Elasthane benötigten Polyesterdiole werden durch thermische Polykondensation von Diolen, z.B. Ethylenglykol, Butandiol-1,4, Hexandiol-1,6 oder ähnlichen Diolen, mit Dicarbonsäuren, z.B. Adipinsäure, in geringem Diol-Überschuß bis etwa 1:1,15, gegebenenfalls in Gegenwart eines Katalysators wie $SnCl_2$, erhalten Bei dieser Methode bilden sich Ester aller denkbaren Molekulargewichte, beginnend beispielsweise beim Diol/Adipinsäuremonoester bis zu Polyesterdiolen mit etwa 15 Adipinsäureeinheiten. Cyclische Polyester ohne Hydroxylgruppen können ebenfalls in geringen Mengen entstehen Überwiegend bilden sich jedoch Hydroxyl-(bzw. in untergeordneten Mengen Carboxyl-) Endgruppen aus.

Charakterisiert werden diese Polyesterdiole durch den Gehalt an freien OH- bzw. COOH-Gruppen und durch ihre Molekulargewichtsverteilung. Die Einheitlichkeit der Molekulargewichtsverteilung wird definiert als das Verhältnis von Gewichtsmittel ($M_w$) zu Zahlenmittelwert des mittleren Molekulargewichts ($M_n$). Der Zahlenmittelwert errechnet sich aus dar Masse des Polymers, geteilt durch die Zahl der Moleküle, aus der die Masse besteht. Der Gewichtsmittelwert $M_w$ ist die Summe der Produkte, gebildet aus Gewichtsfraktionen und Molekulargewichten, geteilt durch die Summe der Gewichtsfraktionen. Die Molekulargewichtsverteilung wird also durch den Quotienten $M_w/M_n$ definiert, den man auch als molekulare Uneinheitlichkeit bezeichnet. Man ermittelt z.B. $M_w$, $M_n$ und die Uneinheitlichkeit aus den Verteilungskurven, die man mit Hilfe der Gel-Permeations-Chromatographie erhält. Die Molekulargewichtsverteilung der durch thermische Polykondensation von Diolen und Dicarbonsäuren hergestellten Polyesterdiole ist rein statistisch und folgt dem bekannten Gesetz von Schulz-Flory.

Aus verschiedenen Gründen ist es für die Eigenschaften der mit diesen Polyesterdiolen aufgebauten Polyurethan-Elastomeren, insbesondere Polyurethan-Elastomerfäden (Elasthane) günstig, die molekulare Uneinheitlichkeit der Polyesterdiole möglichst klein zu machen, d.h. möglichst einheitliche Moleküllängen zu haben.

Bei den konkurrierend zu den Polyesterdiolen eingesetzten Polyetherdiolen, z.B. aus Tetrahydrofuran und Ethylenoxid, hat man versucht, durch Polymerisation in Gegenwart von Bleicherden oder Zeolithen die Einheitlichkeit zu erhöhen; dieses Verfahren läßt sich aber praktisch nicht auf Glykolpolyester übertragen (DE-OS 35 05 152). Bei Polyethern aus Tetrahydrofuran und Ethylenoxid hat man ferner vorgeschlagen, die Molekularge wichtsverteilung dadurch einzuengen, daß man die Polymerisate mit einem Lösungsmittelgemisch aus einem Alkohol, einem Kohlenwasserstoff und Wasser vermischt und danach die drei sich bildenden Phasen voneinander trennt und das Polymerisat mit enger Molekulargewichtsverteilung aus den beiden unteren Phasen isoliert (DE-OS 36 07 946). Auch dieses Verfahren ist zur Trennung von Polyesterdiolen nicht geeignet. Außerdem stören die Alkoholreste und die Wasserreste bei der Umsetzung mit Isocyanaten.

Es bleibt somit die Aufgabe, aus den höhermolekularen Polyesterdiolen die niedermolekularen Anteile (Diole, niedermolekulare Esterdiole) möglichst weitgehend zu entfernen.

Es wurde nunmehr überraschend gefunden, daß man Polyesterdiole bzw. Polyesterurethandiole mit erhöhter molekularer Einheitlichkeit herstellen kann, wenn man Polyesterdiole in einem Gemisch aus polarem und unpolarem Lösungsmittel mit, bezogen auf den Hydroxylgruppengehalt, deutlich unterstöchiometrischen Mengen eines Diisocyanates umsetzt und die sich danach bzw. dabei abscheidende Phase mit dem polaren Lösungsmittel abtrennt und daraus die molekular einheitlichere Polyesterdiolfraktion gewinnt,

2

oder, falls keine Phasentrennung auftritt, das Gemisch mit einem unpolaren Lösungsmittel extrahiert, das Raffinat abtrennt und aus der polaren Phase ein Polyesterdiol mit höherem Molekulargewicht und mit höherer Einheitlichkeit isoliert. Es ist zwar bekannt, Polyesterdiole mit Diisocyanatunterschuß (z.B. im OH/NCO-Verhältnis 2:1, in Lösungsmitteln oder in der Schmelze "vorzuverlängern". Hierbei verändert sich jedoch nicht grundsätzlich die Einheitlichkeit der Gemische und die niedermolekularen Anteile werden nicht abgetrennt.

Andererseits konnte gezeigt werden, daß aus Polyesterdiolen, welche in einem Gemisch von Chlorbenzol und Cyclohexan gelöst sind, durch Zusatz von mehr Nichtlöser, sich praktisch nicht die niedermolekularen Anteile ausfällen lassen.

Zur Polyesterdiolherstellung kommen als Diolkomponenten alle üblichen Diole wie z.B. Ethandiol-1,2, Propandiol-1,2, Butandiol-1,4, Butandiol-2,3, Neopentylglykol-(2,2-dimethylpropandiol-1,3) oder Hexandiol-1,6 in Frage. Als Säuren werden die aliphatischen Dicarbonsäuren bis zu 14 C-Atomen eingesetzt, vorzugsweise verwendet man Adipinsäure. Diese Komponenten werden üblich thermisch verestert unter Wasserabspaltung, vorzugsweise unter Verwendung eines Diol-Überschusses, der zu entsprechenden OH-Endgruppen und (mit steigendem Diol-Überschuß fallenden) Molekulargewichten der Ester führt.

Aus verschiedenen Gründen haben sich Mischpolyester mit Diolen $\geq$ 4 C-Atomen als besonders geeignete Komponenten für Elastomerfäden erwiesen, insbesondere Mischpolyester auf Basis Adipinsäure/Hexandiol/Neopentylglykol (Diol-Molverhältnisse bevorzugt 40:60 bis 80:20) oder Adipinsäure/Hexandiol-1,6/Neopentylglykol/1,4-Butandiol mit einem $M_n$ von 1500-4000, insbesondere 1800-2500.

Als Diisocyanate verwendet man die üblichen Bausteine der Polyurethanchemie wie beispielsweise Diphenylmethan4,4'-diisocyanat, Toluylendiisocyanat, p-Phenylendiisocyanat, Hexamethylendiisocyanat, Dicyclohexylmethan-4,4'-diisocyanat, Isophorondiisocyanat oder Cyclohexandiisocyanate. Bevorzugt werden aromatische Diisocyanate, insbesondere das Diphenylmethan-4,4'-diisocyanat.

Sowohl die Polyesterdiole als höhermolekulare Hydroxyverbindungen als auch für die Synthese geeignete Diisocyanate zur Polyurethan-Elastomerherstellung sind vielfach beschrieben und können hier gleichfalls verwendet werden.

Als polare Lösungsmittel zur Durchführung des erfindungsgemäßen Verfahrens kann man chlorierte aromatische Kohlenwasserstoffe wie Chlorbenzol, Dichlorbenzole, Chlornaphthalin, aliphatische Chlorverbindungen wie Dichlormethan, Chloroform oder alkylierte Amine niedermolekularer Säuren wie Dimethylformamid oder Dimethylacetamid einsetzen. Andere Amide wie Hexamethylphosphorsäuretrisamid oder N-Methylcaprolactam sind ebenfalls geeignet.

Als unpolare Lösungsmittel sind beispielsweise Kohlenwasserstoffe wie Paraffine, Isoparaffine (Benzine) und Cycloaliphaten oder ihre Gemische geeignet. Im einzelnen seien beispielsweise genannt n-Hexan, Cyclohexan oder Isooctan. Cyclohexan ist ein bevorzugtes Lösungsmittel. Lösungsmittelgemische sind sowohl bei den polaren wie auch bei den unpolaren Solventien möglich.

Die Konzentration der Polyesterdiole in Lösungsmitteln kann in weiten Grenzen variiert werden. Aus wirtschaftlichen Gründen wird man sie nicht zu niedrig wählen. Andererseits ergibt sich eine von der Menge des eingesetzten Diisocyanats und der damit erzeugten mittleren Molmassenerhöhung abhängige obere Löslichkeitsgrenze. Konzentrationswerte zwischen 10 und 60 % wurden erprobt, solche zwischen 15 und 50 Gew.-% sind bevorzugt.

Das Verhältnis von polaren zu unpolaren Lösungsmitteln wählt man zweckmäßigerweise so, daß das Polyesterdiol vor der Umsetzung mit dem Isocyanat vollständig gelöst ist. Es kann vorteilhaft sein, die Menge an polaren Lösungsmitteln so zu wählen, daß das Polyesterdiol gerade noch gelöst bleibt. Die Mengenverhältnisse von polaren zu unpolaren Lösungsmitteln betragen etwa 1:10 bis 10:1, bevorzugt von 2,5:5 bis 5:2,5, besonders bevorzugt von 3,5:5 bis 5:3,5.

Das Verhältnis von Diisocyanat zu Polyesterdiol kann prinzipiell in weiten Grenzen, bezogen auf den Gehalt an freien OH-Gruppen, variiert werden. Im allgemeinen setzt man 2 bis 50 Mol-%, vorzugsweise 3 bis 25 Mol-%, insbesondere 5 bis 15 Mol-%, bezogen auf Mol Polyesterdiol, als Diisocyanat ein. Die Reaktionstemperatur kann ebenfalls in weiten Grenzen variiert werden, im allgemeinen arbeitet man zwischen 0 und 100°C, vorzugsweise aber 20 bis 70°C, zumeist bei etwa Raumtemperatur bis 40°C; in besonderen Fällen können auch tiefere oder höhere Temperaturen vorteilhaft sein. Die Anwendung von Druck ist im allgemeinen nicht nötig, könnte jedoch beim Einsatz niedrig siedender Lösungsmittel wie Isobutan, $CO_2$ oder $SO_2$ notwendig werden.

Bei Phasentrennung nach der Umsetzung des gelösten Polyesters mit dem Diisocyanat kann man die polare Phase nochmals mit unpolarem Lösungsmittel extrahieren. Im allgemeinen läßt sich aber nur wenig niedermolekularer Anteil bei dieser nachfolgenden weiteren Extraktion isolieren.

Bei dem erfindungsgemäßen Verfahren bleibt im allgemeinen der größte Anteil des eingesetzen Polyesters in der polaren Phase. Die in der unpolaren Phase enthaltene Menge ist überwiegend die deutlich geringere Menge, enthält zumeist die niedermolekularen Anteile und ist sehr uneinheitlich. Sie macht im allgemeinen nur 5 bis 10 Gew.-% der Polyester-Gesamtmenge aus. Sie kann gegebenenfalls in die Polyesterherstellung zurückgeführt werden. In der unpolaren Phase finden sich gegebenenfalls auch noch nicht umgesetzte Diisocyanate.

Das Polyester(urethan)diol aus der polaren Phase besitzt in jedem Falle eine größere Einheitlichkeit als dies einer Schulz-Flory-Verteilung für schmelzpolykondensierte Polyesterdiole entspricht. Das erfindungsgemäße Verfahren führt zu einer Verschiebung der molekularen Uneinheitlichkeit $M_w/M_n$ um mindestens 0,05, vorzugsweise mindestens 0,1 Einheiten, in Richtung kleinerer Zahlenwerte.

In einer besonderen Ausführungsform des Verfahrens arbeitet man wie folgt: Man löst ein Polyesterdiol (z.B. mit $M_n$ 2000 ($M_w/M_n$ = 1,7)) in Chlorbenzol, so daß eine 20 bis 40 %ige Lösung entsteht und gibt nachfolgend Cyclohexan in einer Menge hinzu, daß die Konzentration auf etwa 10 bis 25 % abfällt. Anschließend fügt man 5 bis 10 Mol-%, bezogen auf freies OH, an Diphenylmethan4,4'-diisocyanat hinzu (dieses Diisocyanat wird bevorzugt, da es auch in der weiteren Umsetzung zum Elasthan verwendet wird). Es bilden sich sofort zwei Phasen. In der unteren Phase sind ca. 90 % des eingesetzten Polyesters mit einer engeren Verteilung (z.B. molekulare Uneinheitlichkeit $M_w/M_n$ = 1,6), in der oberen Cyclohexanphase 10 % des eingesetzten Polyesterdiols mit größerer Uneinheitlichkeit (z.B. $M_w/M_n$ von >2,0) enthalten.

Nach dem Verfahren der Erfindung ist es nunmehr möglich, auch auf Basis von Polyesterdiolen (vorzugsweise mit Molekulargewichten von 800 bis 8.000, besonders 1.500 bis 3.000, segmentierte Polyurethan(Harnstoff)-Elastomere aufzubauen, welche eine engere Molgewichtsverteilung der elastizifierend wirkenden Polyesterweichsegmente aufweisen. Dies bringt bedeutende Vorteile aus einer gleichmäßigeren Spannungsverteilung auf die Weichsegmente bei Dehnung: gleichmäßigerer Anstieg der Moduli, höhere Enddehnung (wegen Fehlens niedermolekularer Anteile) und bessere Festigkeit beim Bruch (weniger extrem-belastete Kurzsegmente, die sonst bereits in frühem Zustand beansprucht werden und eventuell reißen). Überraschend sind auch die elastischen (Relaxations)Verhältnisse deutlich verbessert. Die erfindungsgemäßen Produkte stellen somit wertvolle Ausgangsprodukte dar, welche vorteilhafte Verwendung bei der Synthese von Polyurethan-Elastomeren, im wesentlichen linearen, segmentierten Polyurethan-Harnstoff-Elastomeren und deren Verspinnung zu Elastomerfäden verbesserter Eigenschaften finden können. Die Elastomerfäden (Elastane) zeigen insbesondere günstigere elastische Kennwerte (geringere Relaxation, kleinere bleibende Dehnungen).

Zu der Figur:

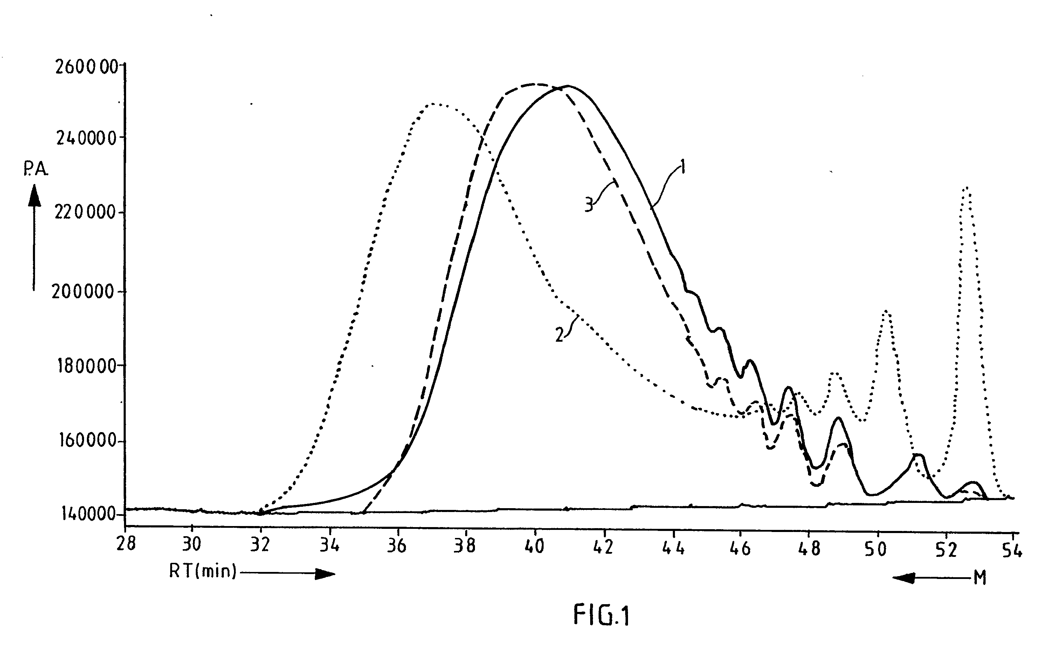

In der Figur 1 werden Gelchromatogramme von Polyesterproben gegenübergestellt.

In der Ordinate bedeuten PA die Peak Amplitude, auf der Abszisse RT die Retentionszeit in Minuten und M (von rechts nach links zunehmend) die Molmasse.

Kurve 1 betrifft die Verteilungskurve des Ausgangspolyesters von Beispiel 4,

Kurve 2 betrifft die Verteilungskurve des im unpolaren Lösungsmittel extrahierten niedermolekularen Anteils,

Kurve 3 betrifft die Verteilungskurve des einheitlicheren Polyesters aus der polaren Phase. Experimentelle Bedingungen:

Säulenkombination aus je 1 Säule mit TSK-Gel G 2000 H8, G 3000 H8 und G 4000 H8 (60x75 cm), Elutionsmittel Tetrahydrofuran, 1 ml/min, Brechungsindex Detektor.

Beispiele

A) Erfindungsgemäße Behandlung der Polyesterdiole

Man setzt in den folgenden Beispielen einen handelsüblichen Adipinsäurepolyester mit Hexandiol-1,6 und 2,2-Dimethylpropandiol-1,3 (Molverhältnis der Diole: 65:35) mit einem Zahlenmolekulargewicht $M_n$ von 1728, einem Gewichtsmittelmolekulargewicht $M_w$ von 2978 und einer molekularen Uneinheitlichkeit $M_w/M_n$ von 1,723 ein. Teile bedeuten hier Gewichtsteile.

Beispiel 1

Die Lösungsmittel Chlorbenzol und Cyclohexan wurden über aktivem, basischen $Al_2O_3$ (Firma Woelm) gereinigt. Man löst 31 Teile Polyesterdiol in einer Mischung aus 70 Teilen Chlorbenzol und 90 Teilen Cyclohexan. Dazu gibt man 0,3925 Gew.-Teile frisch destilliertes Diphenylmethan-4,4'-diisocyanat (ca. 5 Äquivalent-% der OH-Gruppen im Polyesterdiol). Danach bilden sich schnell zwei Phasen; in der unteren Phase sind 28 Teile eines Polyesters (im Lösungsmittel) mit $M_n$ = 2227, $M_w$ = 3644 und $M_w/M_n$ = 1,63. In der oberen Phase sind 3 Teile mit $M_n$ = 1005, $M_w$ = 1928 und $M_w/M_n$ = 1,92 enthalten.

Beispiel 2

31 Teile Polyesterdiol werden in 90 Teilen Dimethylacetamid und 30 Teilen Cyclohexan gelöst. Dazu gibt man 0,786 Teile (10 Mol-%) Diphenylmethan-4,4'-diisocyanat. Nach 48 h bei Raumtemperatur bilden sich zwei Phasen.

Die untere (DMF) Phase, wird mit 40 Teilen Cyclohexan extrahiert. In der unteren Phase sind 29 Teile Feststoff enthalten, mit $M_n$ = 2090, $M_w$ = 3464, $M_w/M_n$ 1,65. In der oberen (Cyclohexan) Phase sind 2 Teile mit $M_n$ = 1062, $M_w$ = 5921, $M_w/M_n$ = 5,62.

Beispiel 3

31 Teile Polyester werden in 50 Teilen Dimethylacetamid und 30 Teilen Cyclohexan gelöst. Dazu gibt man 3,93 Teile Diphenylmethan-4,4'-diisocyanat. Nach 24 h ist das Gemisch noch einphasig. Man extrahiert es mit 50 Teilen Cyclohexan. In der unteren Phase sind 27 Teile Polyester mit $M_n$ = 1962, $M_w$ = 3269, $M_w/M_n$ = 1,58 enthalten. In der oberen Phase sind 3,5 Teile mit $M_n$ = 701, $M_w$ = 4277 und der molekularen Uneinheitlichkeit $M_w/M_n$ = 6,093 enthalten.

Beispiel 4 (vergleiche Fig. 1)

Ausgangspolyester:

Adipinsäurepolyesterdiol der Zusammensetzung nach Beispiel 1, aber etwa unterschiedlichen Molekulargewichts ($M_w$ = 1876, $M_n$ = 3441, $M_w/M_n$ = 1,83, Molekulargewichtsverteilung laut Kurve 1 in der Fig. 1).

Erfindungsgemäße Behandlung:

Man löst 1240 g des Polyesterdiols in 3600 g Cyclohexan und 2800 g Chlorbenzol. Zu dieser Lösung gibt man bei Raumtemperatur 31,4 g 4,4'-Diisocyanatodiphenylmethan. Nach 24 Stunden trennt man die sich in der Zwischenzeit gebildeten 2 Phasen. Aus der oberen Phase erhält man nach Abdestillieren des Lösungsmittels 43 g eines Poly esterdiols mit $M_n$ = 1349, $M_w$ = 5397 und $M_w/M_n$ = 3,99 (Kurve 2). Die untere, polare Phase enthält 1208,2 g eines Polyesters mit $M_n$ = 2154, $M_w$ = 3618 und $M_w/M_n$ = 1,67 (Kurve 3).

Wie aus der Fig. 1 hervorgeht, wird die breite Verteilung des Polyesterdiols (Kurve 1) nach der erfindungsgemäßen Behandlung erheblich enger. Insbesondere werden niedermolekulare Anteile (hohe Retentionszeiten RT) vermindert und auch relativ hochmolekulare Anteile (niedrige RT) vermindert. In dem abgetrennten Teil im unpolaren Lösungsmittel finden sich bevorzugt niedermolekulare und höhermolekulare Anteile in hoher molekularer Uneinheitlichkeit $M_w/M_n$ = 3,99 (Kurve 2).

Das verfahrensgemäß erhaltene Polyesterdiol (Kurve 3) hat eine deutlich verbesserte molekulare Uneinheitlichkeit $M_w/M_n$ = 1,67 gegenüber dem Ausgangswert von 1,83.

B) Verwendung der erfindungsgemäß behandelten Polyesterdiole in Polyurethan(harnstoff)en

Vorbemerkung: Alle Polyesterdiole werden zur Elasthan-Herstellung im Molverhältnis Polyesterdiol/Diphenylmethandiisocyanat = 1:1,80 umgesetzt

Beispiel 5 (Vergleichsbeispiel zu Beispielen 6 und 7)

500 g eines Ausgangspolyesterdiols (Zahlenmolekulargewicht $M_n$ = 1994) (auf Basis Adipinsäure und einer Diol- Mischung aus Hexandiol-1,6 und 2,2-Dimethylpropandiol (Neopentylglykol-Molverhältnis der Diole 65:35) wurden mit 263 g Dimethylacetamid gemischt und mit 112,8 g Diphenylmethan-4,4'-diisocyanat versetzt.

Anschließend wurde 60 Minuten auf 38-50°C erwärmt, bis der NCO-Gehalt des NCO-Prepolymeren 2,38 % (bezogen auf Feststoffgehalt) betrug. Der Feststoffgehalt der NCO-Prepolymerlösung betrug 70 %.

Zu einer Mischung aus 8,94 g Ethylendiamin und 1559 g Dimethylacetamid wurden 18 g $CO_2$ gegeben. Zu dieser Carbamatsuspension wurden unter intensivem Rühren 727,4 g der NCO-Prepolymerlösung innerhalb von 15 Minuten zugesetzt. Man erhält eine klare, homogene Elastomerlösung mit einem Elastomerfeststoffgehalt von 22 % und einer Lösungsviskosität von 88 Pa.s bei 20°C. Die inhärente Viskosität ($\eta i$) betrug 1,52 dl/g. Zu dieser viskosen Elastomerlösung wurden, bezogen auf Polyurethanfeststoff, 0,3 Gew.-% Magnesiumstearat als Antihaftmittel, 0,5 Gew.-% Silwet® L 7607 als Mittel zur besseren Verspinnbarkeit, 1 Gew.-% Cyanox® 1790 und 0,5 Gew.-% Tinuvin® 622 als Stabilisatoren gegeben. Diese Polymerlösung wurde nachdem Trockenspinnverfahren versponnen (Ergebnisse siehe Tabellen 1 und 2).

Beispiel 6

600 g des Polyesterdiols von Beispiel 5, erfindungsgemäß nach der Methode wie im Beispiel 1 beschrieben nachbehandelt, und danach ein Molekulargewicht von 2416 auf weisend, wurden mit 305 g Dimethylacetamid gemischt und mit 111,7 g Diphenylmethan-4,4'-diisocyanat (Desmodur®44/Bayer AG) versetzt. Anschließend wurde 90 Minuten auf 40 bis 50°C erwärmt, bis der NCO-Gehalt (bezogen auf Feststoffgehalt) des NCO-Prepolymeren 1,55 % (das sind 66 % der Theorie) betrug. Der Feststoffgehalt der NCO-Prepolymerlösung ist 70 Gew.-%.

Zu einer Mischung aus 6,6 g Ethylendiamin, 0,16 g Diethylamin und 1769,4 g Dimethylacetamid wurden 14 g $CO_2$ gegeben. Zu dieser Carbamatsuspension wurden unter intensivem Rühren 804,1 g der NCO-Prepolymerlösung innerhalb von 15 Minuten zugesetzt. Man erhält eine klare, homogene Elastomerlösung mit einem Elastomerfeststoffgehalt von 22 Gew.-% und eine Lösungsviskosität von 82 mPa.s bei 20°C. Die inhärente Viskosität ($\eta i$) betrug 1,24 dl/g. Zu dieser viskosen Elastomerlösung wurden, bezogen auf Polyurethanfeststoff die in Beispiel 5 genannten Zusatzstoffe zugesetzt. Diese Polymerlösung wurde nach dem Trockenspinnverfahren versponnen. Ergebnisse siehe Tabellen 1 und 2.

Beispiel 7

Ein Polyesterdiol der Zusammensetzung wie in Beispiel 5 beschrieben, aber mit einem Ausgangsmolekulargewicht von $M_n$ = 2074, wurde erfindungsgemäß nach der in Beispiel 1 beschriebenen Methode nachbehandelt und ergab ein Polyesterdiol mit einem $M_n$ = 2593.

700 g dieses Polyesterdiols wurden mit 352 g Dimethylacetamid gemischt und mit 122 g Diphenylmethan-4,4'-diisocyanat versetzte. Anschließend wurde 90 Minuten auf 40 bis 50°C erwärmt, bis der NCO-Gehalt des NCO-Prepolymeren 2,0 Gew.-%, bezogen auf Feststoff, das sind 90 % der Theorie, betrug. Der Feststoffgehalt der NCO-Prepolymerlösung betrug 70 Gew.-%.

Zu einer Mischung aus 9,4 g Ethylendiamin, 0,23 g Diethylamin und 1998 g Dimethylacetamid wurden 20 g $CO_2$ zugegeben. Zu dieser Carbamatsuspension wurden unter intensivem Rühren 912 g der NCO-Prepolymerlösung innerhalb von 15 Minuten zugesetzt. Man erhält eine klare, homogene Elastomerlösung mit einem Elastomerfeststoffgehalt von 22 % und eine Lösungsviskosität von 63 Pa.s/20°C. Die inhärente Viskosität betrug 1,29 dl/g. Zu dieser viskosen Elastomerlösung wurden, bezogen auf Polyurethan-Feststoff, die in Beispiel 5 genannten Zusätze gegeben. Die Polymerlösung wurde nach dem Trockenspinnverfahren versponnen (Ergebnisse siehe Tabellen 1 und 2).

Beispiel 8 (Vergleichsbeispiel zu Beispielen 9 und 10)

800 g eines unbehandelten Polyesterdiols auf Basis von Adipinsäure, Hexandiol/Neopentylglykol (65/35 Diol-Molverhältnis), mit einem $M_n$ = 2074, wurden mit 417 g Dimethylacetamid gemischt und mit 174 g Diphenylmethan-4,4'-diisocyanat versetzt Anschließend wurde 90 Minuten auf 40 bis 50°C erwärmt, bis der NCO-Gehalt des NCO-Prepolymeren 2,4 Gew.-% (bezogen auf Feststoffgehalt) (das sind 90 % der Theorie) betrug. Der Feststoffgehalt der NCO-Prepolymerlösung betrug 70 Gew.-%.

Zu einer Mischung aus 14 g Ethylendiamin und 2450 g Dimethylacetamid wurden 28 g $CO_2$ zugegeben. Dieser Carbamatsuspension wurden unter intensivem Rühren 1136 g der NCO-Prepolymerlösung innerhalb von 15 Minuten zugesetzt. Man erhält eine klare, homogene Elastomerlösung mit einem Elastomerfeststoffgehalt von 22 Gew.-% und einer Lösungsviskosität von 113 Pa.s bei 20° C. Die inhärente Viskosität ($\eta i$) betrug 1,49 dl/g. Zu dieser viskosen Elastomerlösung wurden die Zusätze, wie in Beispiel 5 beschrieben, zugesetzt. Die Polymerlösung wurde nach dem Trockenspinnverfahren versponnen (Meßergebnisse siehe Tabellen 1 und 2).

Beispiel 9

Ein Ausgangspolyesterdiol mit Molekulargewicht $M_n$ = 2074 - vgl. Beispiel 1 - wurde nach der Methode, wie in Beispiel 2 beschrieben, erfindungsgemäß behandelt und ergab ein Polyesterdiol mit einem Molekulargewicht von $M_n$ = 2240.

826 g dieses Polyesterdiols ($M_n$ = 2240) in 1174 g Dimethylacetamid wurden mit 47 g Dimethylacetamid und 166 g Diphenylmethan-4,4'-diisocyanat versetzt. Anschließend wurde 90 Minuten auf 40 bis 50° C erwärmt, bis der NCO-Gehalt des NCO-Prepolymeren 2,3 Gew.-% (bezogen auf Feststoffgehalt) (das sind 91 % der Theorie), betrug. Der Feststoffgehalt der NCO-Prepolymerlösung betrug 45 Gew.-%

Einer Mischung aus 14 g Ethylendiamin, 0,34 g Diethyl amin und 1917 g Dimethylacetamid wurden 28 g $CO_2$ zugegeben. Zu dieser Carbamatsuspension wurden unter intensivem Rühren 1800 g der NCO-Prepolymerlösung innerhalb von 15 Minuten zugesetzt. Man erhält eine klare, homogene Elastomerlösung mit einem Elastomerfeststoffgehalt von 22 Gew.-% und einer Lösungsviskosität von 65 Pa.s bei 20° C. Die inhärente Viskosität ($\eta i$) betrug 1,23 dl/g. Zu dieser viskosen Elastomerlösung wurden die Zusätze wie in Beispiel 5 beschrieben, zugegeben. Die Polymerlösung wurde nach dem Trockenspinnverfahren versponnen (Ergebnisse siehe Tabellen 1 und 2).

Beispiel 10

Ein Polyesterdiol der Zusammensetzung nach Beispiel 9, $M_n$ = 2074 wurde erfindungsgemäß nach Beispiel 2 nachbehandelt und ergab ein Polyesterdiol mit einem $M_n$ = 2635. 1500 g einer 76 %igen Polyesterdiollösung in Dimethylacetamid wurden mit 212 g Dimethylacetamid und 195 g Diphenylmethan-4,4'-diisocyanat versetzt. Anschließend wurde 90 Minuten auf 40 bis 50° C erwärmt, bis der NCO-Gehalt des NCO-Prepolymeren 1,96 %, das sind 90 % der Theorie, betrug. Der Feststoff des NCO-Prepolymeren betrug 70 %.

Zu einer Mischung aus 17,8 g Ethylendiamin, 0,22 g Diethylamin und 3773 g Dimethylacetamid wurden 36 g $CO_2$ zugegeben. Zu dieser Carbamatsuspension wurden unter intensivem Rühren 1766 g der NCO-Prepolymerlösung innerhalb von 15 Minuten zugesetzt. Man erhält eine klare, homogene Elastomerlösung mit einem Elastomerfeststoff von 22 % und eine Lösungsviskosität von 56 Pa.s bei 20° C. Die inhärente Viskosität betrug 1,31 dl/g. Zu dieser viskosen Elastomerlösung wurden Zusätze, wie in Beispiel 5 beschrieben, zugegeben. Die Polymerlösung wurde nach dem Trockenspinnverfahren versponnen (Ergebnisse siehe Tabellen 1 und 2).

Beispiel 11 (Vergleich)

1000 g eines unbehandelten Polyesterdiols auf Basis von Adipinsaure, Neopentylglykol, Hexandiol-1,6 und Butandiol-1,4 (Molverhältnis der Diole 64, 17, 19) wurden mit 794 g Dimethylacetamid und 191 g Diphenylmethan-4,4'-diisocyanat versetzt. Anschließend wurde 50 Minuten auf 40 bis 50° C erwärmt, bis der NCO-Gehalt des NCO-Prepolymeren 2,72 %, das sind 84 % der Theorie, betrug. Der Feststoffgehalt des NCO-Prepolymeren betrug 60 %.

Zu einer Mischung aus 18,6 g Ethylendiamin, 0,46 g Diethylamin und 2659 g Dimethylacetamid wurden 40 g $CO_2$ zugegeben. Zu dieser Carbamatsuspension wurden unter intensivem Rühren 1519 g der NCO-Prepolymerlösung innerhalb von 15 Minuten zugesetzt. Man erhält eine klare, homogene Elastomerlösung mit einem Elastomerfeststoffgehalt von 22 % und einer Lösungsviskosität von 95 Pa.s/20° C. Die inhärente Viskosität betrug 1,43 dl/g. Zu dieser viskosen Elastomerlösung wurden Zusätze, wie in den anderen Beispielen beschrieben, zugesetzt. Die Polymerlösung wurde nach dem Trockenspinnverfahren versponnen (Ergebnisse siehe Tabellen 1 und 2).

Beispiel 12

(Vergleichsbeispiel zu Beispielen 6, 7, 9 und 10)

500 g eines unbehandelten Polyesterdiols auf Basis von Adipinsäure, Hexandiol und Neopentylglykol (65:35-Diol-Molverhältnis) mit $M_n$ = 3306 wurden mit 239,4 g Dimethylacetamid und 113,4 g Diphenylmethan-4,4'-diisocyanat versetzt. Anschließend wurde 80 Minuten auf 40 bis 50°C erwärmt, bis der NCO-Gehalt des NCO-Prepolymeren 3,7 Gew.-%, das sind 88,6 % der Theorie, betrug. Der Feststoffgehalt der NCO-Prepolymerlösung betrug 70 Gew.-%.

Zu einer Mischung aus 14,2 g Ethylendiamin und 1578 g Dimethylacetamid wurden 29 g $CO_2$ zugegeben. Zu dieser Carbamatsuspension wurden unter intensivem Rühren 700 g der NCO-Prepolymerlösung innerhalb von 15 Minuten zugesetzt. Man erhält eine klare, homogene Elastomerlösung mit einem Elastomerfeststoffgehalt von 22 % und einer Lösungsviskosität von 134 Pa.s/20°C. Die inhärente Viskosität ($\eta i$) betrug 1,37 dl/g. Zu dieser viskosen Elastomerlösung wurden Zusätze, wie in Beispiel 5 beschrieben, zugesetzt. Die Polymerlösung wurde nach dem Trockenspinnverfahren versponnen (Ergebnisse siehe Tabellen 1 und 2).

8

Tabelle 1

| Textil-Daten der Elastanfäden*) aus den Beispielen (Trockenspinnversuche) | | | | | | | | | | |
|---|---|---|---|---|---|---|---|---|---|---|
| | Titer (dtex) | FF (cN/dtex) | FFist (cN/dtex) | HZKD (%) | $\epsilon$ (%) | HDT (°C) | OH:NCO | NCO-fest (%) | NCO % der Theorie | $\eta i$ |
| Beispiel 5 (Vergleich zu 6 und 7) | 152 | 0,80 | 4,03 | 412 | 18 | 170 | 1:1,80 | 2,4 | 86,4 | 1,52 |
| Beispiel 6 | 154 | 0,93 | 5,62 | 503 | 10 | 170 | 1:1,80 | 1,6 | 66 | 1,24 |
| Beispiel 7 | 172 | 0,91 | 5,58 | 514 | 14 | 172 | 1:1,80 | 2,0 | 90 | 1,29 |
| Beispiel 8 (Vergleich zu 6 und 7) | 140 | 0,84 | 4,50 | 433 | 21 | 182 | 1:1,80 | 2,4 | 90 | 1,49 |
| Beispiel 9 | 165 | 0,95 | 5,77 | 504 | 13 | 179 | 1:1,80 | 2,3 | 91 | 1,03 |
| Beispiel 10 | 154 | 1,03 | 6,17 | 501 | 15 | 188 | 1:1,80 | 1,96 | 90 | 1,31 |
| Beispiel 11 (Vergleich zu 6,7,9 und 10) | 169 | 0,84 | 5,62 | 550 | 17 | 178 | 1:2,5 | 2,72 | 84 | 1,43 |
| Beispiel 12 (Vergleich zu 6,7,9 und 10) | 146 | 1,09 | 6,95 | 537 | 21 | 182 | 1:3,3 | 3,66 | 89 | 1,37 |

*) Die Verspinnung der Lösungen erfolgte nach dem Trockenspinnverfahren jeweils über eine 12-Loch-Düse mit Bohrungen von je 0,3 mm Durchmesser, Schachtheiztemp. 220 °C, Lufttemp. 270 °C, Abzugsgeschw. 00 m/min unter Verwendung eines Luftdrallgebers.

Tabelle 2

| | Bsp. 5 (Vergl. zu 6,7) | Bsp. 6 erf.gem. | Bsp. 7 erf.gem. | Bsp. 8 (Vergl. zu 9,10) | Bsp. 9 erf.gem. | Bsp. 10 erf.gem. | Bsp. 11 (Vergl. zu 6,7,9,10) | Bsp. 12 Vergleich |
|---|---|---|---|---|---|---|---|---|
| Elastisches Verhalten der beschriebenen Elasthanfäden | | | | | | | | |
| Linearitätsverhältnis 5.B.150/5.B.300 | 0,18 | 0,26 | 0,32 | 0,18 | 0,23 | 0,26 | 0,20 | 0,19 |
| Relaxationsverhältnis E.300/B.300 | 0,74 | 0,80 | 0,80 | 0,75 | 0,77 | 0,78 | 0,75 | 0,73 |
| Ermüdungsverhältnis 5.B.300/1.B.300 | 0,71 | 0,88 | 0,89 | 0,72 | 0,79 | 0,89 | 0,79 | 0,77 |
| Ermüdungsverhältnis 5.B.150/1.B.150 | 0,33 | 0,55 | 0,54 | 0,32 | 0,42 | 0,50 | 0,36 | 0,35 |
| Ermüdungsverhältnis 5.B.50/1.B.50 | 0,29 | 0,63 | 0,62 | 0,32 | 0,42 | 0,60 | 0,39 | 0,31 |
| Hystereserverhältnis 5.E.150/5.B.150 | 0,72 | 0,81 | 0,81 | 0,77 | 0,79 | 0,79 | 0,56 | 0,68 |
| Hystereseverhältnis 5.E.50/1.B.150 | 0,24 | 0,45 | 0,44 | 0,25 | 0,33 | 0,39 | 0,20 | 0,24 |
| Hystereseverhältnis 5.E.50/5.B.50 | 0,73 | 0,83 | 0,77 | 0,75 | 0,82 | 0,83 | 0,75 | 0,55 |
| Hystereseverhältnis 5.E.50/1.B.50 | 0,21 | 0,53 | 0,48 | 0,24 | 0,35 | 0,50 | 0,29 | 0,17 |
| Reversible Arbeit | 78 % | 83 % | 85 % | 79 % | 81 % | 82 % | 67 % | 70 % |

Meßmethoden: (siehe Tabelle 1)

Die in den Beispielen erwähnten Meßgrößen wurden wie folgt bestimmt: Die inhärente Viskosität ($\eta i$) der Elastomeren wurde in verdünnter Lösung von c = 0,5 g/100 ml Dimethylacetamid bei 30°C durch Bestimmung der relativen Viskosität $\eta_r$ gegenüber dem reinen Lösungsmittel bestimmt und nach der Formel

$$\eta R = \tfrac{t1}{t0}$$

$t_1$ : Durchlaufzeit (sec) der Polymerlösung

$t_0$ : Durchlaufzeit (sec) des reinen Lösungsmittels

$$\eta i = \frac{\ln \eta_r}{c}$$

umgerechnet. Die Feinheitsfestigkeit wurde in Anlehnung an DIN 53 815 bestimmt (cN/dtex). Die Höchstzugkraftdehnung (in %) erfolgte ebenfalls nach DIN 53 815. Die Restdehnung (e) wurde nach fünfmaliger Ausdehnung auf 300 % und nach einer Erholungszeit von 60 Sekunden bestimmt. Die Messung von heat distortion Temperatur (HDT), erfolgte nach Methoden, die in Chemiefasern/Textilindustrie, Januar 1978, Heft 1/78, 28./80. Jahrgang auf Seite 44-49 beschrieben sind. Entsprechende Angaben finden sich auch in DE-A 25 42 500 (1975).

Die in Tabelle 2 aufgeführten Verhältnisse sind wie folgt definiert:

Linearitätsverhältnis:

5.B.150/5.B.300

Kraftaufnahme bei fünfter Belastung und 150 % Dehnung zu Kraftaufnahme bei fünfter Belastung und 300 % Dehnung im Dehnungspendelexperiment.

Relaxationsverhältnis:

E.300/B.300

Nach fünf Dehnungszyklen bis 300 % Dehnung: Kraftaufnahme nach 6. Dehnung bis 300 % und einer Verweildauer von 60 sec. (Entlastung bei 300 %) zur Kraftaufnahme nach sechster Belastung bei 300 % Dehnung.

Ermüdungsverhältnis:

5.B.300/1.B.300

Kraftaufnahme bei fünfter Belastung und 300 % Dehnung zu Kraftaufnahme bei erster Belastung und 300 % Dehnung.

Ermüdungsverhältnis:

5.B.150/1.B.150

Kraftaufnahme bei fünfter Belastung und 150 % Dehnung zu Kraftaufnahme bei erster Belastung und 150 % Dehnung.

Ermüdungsverhältnis:

5.B.50/1.B.50

Kraftaufnahme bei fünfter Belastung und 50 % Dehnung zu Kraftaufnahme bei erster Belastung und 50 % Dehnung.

Hystereseverhältnis:

5.E.150/5.B.150

Kraftaufnahme bei fünfter Entlastung und 150 % Dehnung zu Kraftaufnahme bei fünfter Belastung und 150 % Dehnung.

Hystereseverhältnis:

5.E.150/1.B.150

Kraftaufnahme bei fünfter Entlastung und 150 % Dehnung zu Kraftaufnahme bei erster Belastung und 150 % Dehnung.

Hystereseverhältnis:

5.E.50/5.B.50

Kraftaufnahme bei fünfter Entlastung und 50 % Dehnung zu Kraftaufnahme bei fünfter Belastung und 50 % Dehnung.

Hystereseverhältnis:

5.E.50/1.B.50

Kraftaufnahme bei fünfter Entlastung und 50 % Dehnung zu Kraftaufnahme bei erster Belastung und 50 % Dehnung.

Reversible Arbeit
(bei 300 %/5. Cyclus)
Verhältnis der Arbeit im 5. Entlastungscyclus zur Arbeit im 5. Belastungscyclus (jeweils beim 5. Dehnungs-/Entlastungscyclus bis 300 % Dehnung), ausgedrückt in Prozent.

$$\mathbf{Rev.Arb.} = \frac{\mathbf{A\ Entlastungscyclus}}{\mathbf{A\ Belastungscyclus}} \cdot 100$$

Je größer der Wert der genannten Verhältnisse ist, umso besser sind die elastischen Eigenschaften.

## Ansprüche

1. Verfahren zur Herstellung von Polyesterdiolen bzw. Polyester(urethan)diolen mit erhöhter Einheitlichkeit, dadurch gekennzeichnet, daß man Polyesterdiole in einem Gemisch aus unpolarem und polarem Lösungsmittel mit, bezogen auf den Hydroxylgruppengehalt, unterstöchiometrischen Mengen eines Diisocyanats umsetzt und die sich abscheidende Phase mit dem polaren Lösungsmittel abtrennt, oder bei Ausbleiben einer Phasentrennung, mit einem unpolaren Lösungsmittel extrahiert, das Raffinat abtrennt und aus der polaren Phase ein Polyester(urethan)diol mit erhöhter molekularer Einheitlichkeit abtrennt.

2. Verfahren nach Anspruch 1, dadurch gekennzeichnet, daß man Adipinsäurepolyesterdiole einsetzt.

3. Verfahren nach Ansprüchen 1 bis 2, dadurch gekennzeichnet, daß man Ethylenglykolpolyester einsetzt.

4. Verfahren nach Ansprüchen 1 bis 2, dadurch gekennzeichnet, daß man Hexandiol-1,6/Neopentylglykol/Adipinsäurepolyester mit einem $M_n$ von 1.800 bis 2.500 einsetzt.

5. Verfahren nach Ansprüchen 1 bis 4, dadurch gekennzeichnet, daß man als polare Lösungsmittel Chlorbenzol, Dimethylformamid oder Dimethylacetamid einsetzt.

6. Verfahren nach Ansprüchen 1 bis 5, dadurch gekennzeichnet, daß man als unpolares Lösungsmittel Cyclohexan einsetzt.

7. Verfahren, dadurch gekennzeichnet, daß man das Diisocyanat in Mengen von 2 bis 50, vorzugsweise 5 bis 15 Mol-% NCO, bezogen auf die Menge an OH-Gruppen, einsetzt.

8. Polyester(urethan)diole verbesserter Einheitlichkeit, dadurch gekennzeichnet, daß die Polyesterdiole aus thermischem Polykondensationsverfahren dem erfindungsgemäßen Verfahren nach Ansprüchen 1 bis 7 unterworfen werden und eine Verschiebung der molekularen Uneinheitlichkeit $M_w/M_n$ um mindestens 0,05 Einheiten in Richtung kleinerer Zahlenwerte aufweisen.

9. Polyester(urethan)diole verbesserter Einheitlichkeit nach Anspruch 8 mit Werten $M_w/M_n$ ≦1,67.

10. Verwendung der Diole nach Ansprüchen 8 und 9, dadurch gekennzeichnet, daß man sie als Makrodiole bei der Synthese von segmentierten Polyurethan(harnstoff)-Elastomeren einsetzt.

FIG.1